# EUROPEAN PATENT APPLICATION

(11) **EP 3 018 583 A1**
(43) Date of publication of application: **11.05.2016**
(21) Application number: 13888626.2
(22) Date of filing: 02.07.2013
(51) Int. Cl.: G06F 9/50, G06F 9/46

(54) **VIRTUAL MACHINE MANAGEMENT METHOD, VIRTUAL MACHINE MANAGEMENT DEVICE, AND VIRTUAL MACHINE MANAGEMENT PROGRAM**

(71) Applicant: Fujitsu Limited, Kawasaki-shi, Kanagawa 211-8588 (JP)
(72) Inventor: DOI, Tsunehisa, Kawasaki-shi Kanagawa 211-8588 (JP)
(74) Representative: Hoffmann Eitle
(86) International application number: PCT/JP2013/068129
(87) International publication number: WO 2015/001615

(57) **Abstract**

A virtual machine management method includes: permitting movement of a virtual machine (5) to a first information processing apparatus (2) that controls a virtual machine (5) using a first instruction set, from a second information processing apparatus (2) that controls a virtual machine (5) using a second instruction set; issuing a notification of information relating to the first instruction set to the virtual machine (5) to be moved from the second information processing apparatus (2) to the first information processing apparatus (2) ; and executing, by the first information processing apparatus (2), control for the moved virtual machine (5) using the first instruction set.

## Description

### TECHNICAL FIELD

The present embodiments relate to a virtual machine management method, a virtual machine management apparatus, and a virtual machine management program.

### BACKGROUND ART

In an information processing system that includes a plurality of physical servers (physical machines, information processing apparatus) that control a plurality of virtual machines (VMs), migration of moving a virtual machine between physical servers is sometimes performed in response to a state of the physical servers. It is to be noted that, as such migration, migration of moving a virtual machine between physical servers while the virtual machine continues its operation is available.

Where physical servers are apparatus having different specifications, when a movement determination of a virtual machine is to be determined, a server, a manager or the like (hereinafter referred to simply as server or the like) that manages the migration sometimes confirms whether or not the movement destination is a physical server that is inexpedient to operation of the virtual machine.

For example, a server or the like confirms whether or not there is a support for instructions (extended CPU instruction set) arising from a difference between Central Processing Units (CPUs) provided in the physical servers before and after the movement of the virtual machine. As a result of the confirmation, the server or the like does not perform the migration of the physical machine between physical servers (CPUs) that support extended CPU instruction sets different from each other.

It is to be noted that the extended CPU instruction set is a group of instructions incorporated in a CPU for causing the CPU to execute a predetermined process separately from instructions the CPUs have commonly. In the description given below, an extended CPU instruction set is sometimes referred to merely as extended instruction set or instruction set.

The extended instruction set supported by a CPU is different in level depending upon the specifications and so forth of the CPU. It is to be noted that CPUs of old generations are in most cases smaller in number of instructions included in an extended instruction set than CPUs of new generations, namely, lower in level.

Incidentally, also it is possible for a server or the like to perform the migration compulsorily between physical servers that support different extended instruction sets from each other as described below.

In a case where a virtual machine is to be moved from a physical server (CPU) that supports an extended instruction set of a low level to another physical server (CPU) that supports an extended instruction set of a high level, the virtual machine does not utilize an instruction that is not supported by the CPU before the movement even if the instruction is supported by the CPU after the movement. This is because the virtual machine operates in accordance with the extended instruction set supported by the physical server (CPU) when it is started up.

On the other hand, in another case where a virtual machine is moved from a physical server (CPU) that supports an extended instruction set of a high level to another physical server (CPU) that supports an extended instruction set of a low level, the virtual machine may fail to utilize an instruction that has been used till then. For example, if the virtual machine executes an extended instruction set which has existed before the movement but does not exist after the movement, then an "Illegal Instruction" is generated, and the virtual machine thereafter is stopped.

Therefore, the server or the like confirms, when a physical server of a movement destination by migration is to be determined, a CPU of the movement destination and decides whether or not the physical serve is movable. Then, the server or the like excludes at least physical servers that support an extended instruction set of a lower level than that before the movement from the movement destination.

It is to be noted that a hardware assist mechanism is known which restricts an extended instruction set to be utilized by a virtual machine to an extended instruction set of the lowest level from among extended instruction sets that are supported by a plurality of physical servers by which the virtual machine can be executed. According to the hardware assist mechanism, since a virtual machine utilizes an extended instruction set of a minimum set, a virtual machine can be moved between VM hosts that support an instruction set of a level equal to the level of the result of the restriction. Accordingly, the VM allocation management server or the like need not exclude physical servers that support an extended instruction set of a level lower than that before the movement from the movement destination. It is to be noted that, as the hardware assist mechanism, for example, "FlexMigration" of Intel (registered trademark) is available.

As a related technology, also a technology is known that an instruction common to instruction sets incorporated in CPUs before and after the migration is executed by the CPU after the movement, but an instruction that does not exist in the CPU after the movement is emulated by an instruction emulator (refer, for example, to Patent Document 1).

Further, as another related technology, also a technology is known that execution of a virtual machine is changed over between first and second switching hypervisors coupled to a share memory (refer, for example, to Patent Document 2). According to the technology, in a case where the hardware architecture used by a virtual machine is different between those before and after the execution, the virtual machine simulates the instruction set.

As a further related technology, also a technology is known that, in a case where a CPU detects a predetermined instruction that cannot be executed by a guest Operating System (OS), a virtual machine monitor generates an emulation code of a predetermined instruction and stores the emulation code additionally into the virtual machine (refer, for example, to Patent Document 3).

### PRIOR ART DOCUMENT

### PATENT DOCUMENT

Patent Document 1: Japanese Laid-Open Patent Publication No. 2010-272055
Patent Document 2: Japanese Laid-Open Patent Publication No. 2011-100431
Patent Document 3: Japanese Laid-Open Patent Publication No. 2011-123635

### SUMMARY OF THE INVENTION

### SUBJECT TO BE SOLVED BY THE INVENTION

Since a server or the like restricts a physical server of a movement destination of the migration in response to an extended instruction set to be supported, it has a subject that the performance of the system is restricted. For example, if a server or the like repeats migration, then the number of virtual machines that can be moved to a physical server that supports an extended instruction set of a lower level gradually decreases, and virtual machines sometimes gather to a physical server that supports an extended instruction set of a higher level. As a result, the utilization efficiency of resources of the system drops and the performance of the system is restricted.

On the other hand, in a case where a virtual machine is moved from a physical server that supports an extended instruction set of a low level to another physical server that supports an extended instruction set of a high level, an extended instruction set that does not exist in the movement destination is not utilized by the physical server of the movement destination. Similarly, in a case where the hardware assist mechanism described hereinabove is utilized, a restricted extended instruction set is not utilized by the physical server of the movement destination. In other words, the physical server of the movement destination has a subject that, in execution of the virtual machine moved thereto, it cannot sometimes exhibit a function originally owned thereby.

In this manner, there is a subject that, in movement of a virtual machine between physical servers, the utilization efficiency of the system by the virtual machine is sometimes deteriorated.

It is to be noted that the related technologies described above do not take the subject described above into consideration.

According to one aspect of the present invention, it is an object of the present invention to improve, in an information processing system that permits movement of a virtual machine between information processing apparatus, the utilization efficiency of the information processing system by a virtual machine.

It is to be noted that not only the object described above but also it can be positioned as one of other objects of the present invention to achieve working-effects that can be derived from a configuration depicted by a mode for carrying out the invention hereinafter described but cannot be derived by the conventional technologies.

### MEANS FOR SOLVING THE SUBJECT

According to an aspect of the embodiments, a virtual machine management method includes: permitting movement of a virtual machine to a first information processing apparatus that controls a virtual machine using a first instruction set, from a second information processing apparatus that controls a virtual machine using a second instruction set; issuing a notification of information relating to the first instruction set to the virtual machine to be moved from the second information processing apparatus to the first information processing apparatus; and executing, by the first information processing apparatus, control for the moved virtual machine using the first instruction set.

### EFFECT OF THE INVENTION

With the embodiment, it is possible, in an information processing system that permits movement of a virtual machine between information processing apparatus, to improve the utilization efficiency of the information processing system by a virtual machine.

### BRIEF DESCRIPTION OF DRAWINGS

FIG. 1 is a view depicting an example of a configuration of an information processing system according to an embodiment.
FIG. 2 is a view depicting an example of a hardware configuration of a physical server depicted in FIG. 1.
FIG. 3 is a view depicting an example of a configuration of the physical server depicted in FIG. 1.
FIG. 4 is a flow chart illustrating an example of a migration process by the server depicted in FIG. 3.
FIG. 5 is a view illustrating the example of the migration process by the server depicted in FIG. 3.
FIG. 6 is a flow chart illustrating an example of a process to an exception generation instruction by the server depicted in FIG. 3.
FIG. 7 is a view illustrating an example of the process to an exception generation instruction by the server depicted in FIG. 3.
FIG. 8 is a view depicting a first modification to the configuration of the physical server depicted in FIG. 1.
FIG. 9 is a view illustrating an example of a migration process by the physical server depicted in FIG. 8.
FIG. 10 is a view depicting a second modification to the configuration of the physical server depicted in FIG. 1.
FIG. 11 is a view illustrating an example of a process to an exception generation instruction by the physical server depicted in FIG. 10.

### MODE FOR CARRYING OUT THE INVENTION

In the following, an embodiment is described with reference to the drawings.

### (1) Embodiment

### (1-1) Configuration of Information Processing System

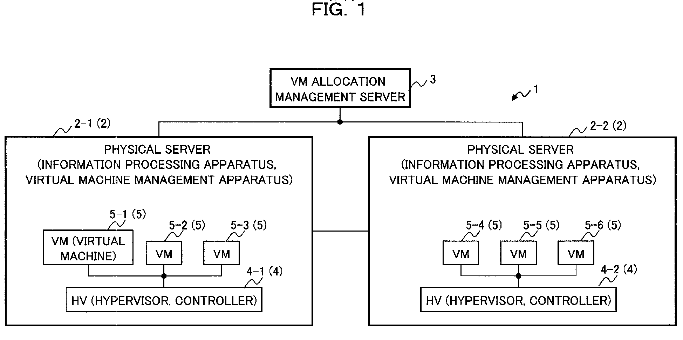

In the following, a configuration of an information processing system 1 as an example of an embodiment is described with reference to FIG. 1.

FIG. 1 is a view depicting an example of a configuration of the informationprocessing system 1 according to the embodiment.

As depicted in FIG. 1, the information processing system 1 according to the embodiment includes a plurality of (for example, two) physical servers 2-1 and 2-2 (in the description given below, in a case where the physical servers 2-1 and 2-2 are not distinguished from each other, each of them is referred to simply as physical server 2), and a VM allocation management server 3.

The information processing system 1 executes migration (for example, live migration) of a virtual machine between the plurality of physical servers 2.

Each physical server (virtual machine management apparatus) 2 is a server that performs management of virtual machines, and each virtual machine operates utilizing resources of the physical server 2 such as a CPU and a memory. For the physical server 2, computers (information processing apparatus) such as a Personal Computer (PC) and a server are available.

The physical server 2-1 includes an HV (Hypervisor) 4-1 and a plurality of (for example, three) VMs 5-1 to 5-3. Meanwhile, the physical server 2-2 includes an HV 4-2 and a plurality of (for example, three) VMs 5-4 to 5-6. In the description given below, in a case where the HVs 4-1 and 4-2 are not distinguished from each other, each of them is referred to merely as HV 4, and in a case where the VMs 5-1 to 5-6 are not distinguished from each other, each of them is referred to merely as VM 5.

Each HV (hypervisor, control unit) 4 is software that operates as a VM host that performs control of VMs 5.

Further, the HV 4 permits movement (transfer) of a VM 5 to or from a different physical server 2 that is to control the VM 5 using an extended CPU instruction set (extended instruction set). In the present embodiment, the HV 4 can permit movement of a VM 5 even where the level (instruction level, utilization level) of the extended instruction set used by the CPU of a different physical server 2 is different from that of the extended instruction set used by the CPU of the physical server 2.

Here, as the extended instruction set, in the case of the Intel x86 type CPU, Streaming DIMD Extensions (SSE) that is an example of multimedia type instructions is available. SSE is enhanced in function in order of SSE to SSE4 and so forth.

Meanwhile, as an extended instruction set for the Intel x86 type CPU, Advanced Encryption Standard Instruction Set (AES-NI) that is an encryption type instruction and so forth are available.

The level of an extended instruction set used in the following description signifies a level of one of such extended instruction sets as described above that can be utilized by a CPU. For example, where the extended instruction set is SSE, the level of the extended instruction set is a level of the SSE - SSE4 or the like.

The VMs (virtual machines) 5 are software that perform various processes such as execution of an OS (guest OS) under the control of the HV 4.

Details of the HVs 4 and the VMs 5 are hereinafter described.

The VM allocation management server 3 is a server that manages the migration between physical servers 2. The VM allocation management server 3 manages information of a plurality of physical servers 2 and information of VMs 5 in an associated relationship with each other and performs migration of a VM 5 in response to an instruction from a manager or the like of the information processing system 1. As the VM allocation management server 3, an information processing apparatus such as a PC or a server is available.

Further, the VM allocation management server 3 grasps information (at least the level) relating to an extended instruction set supported by the CPU of each physical server 2. For example, when the information processing system 1 is started up, when the configuration of the information processing system 1 is changed or in a like case, the VM allocation management server 3 acquires information relating to the extended instruction set of the physical servers 2 from the physical servers 2, the manager or the like. It is to be noted that the information relating to an extended instruction set may be the level of an extended instruction set or information for specifying the extended instruction set.

It is to be noted that, when migration is to be performed, preferably the VM allocation management server 3 notifies the physical server 2 (HV 4) of the movement destination of the VM 5 of information relating to an extended instruction set that can be utilized by the physical server 2 of the movement destination. Further, when migration is to be performed, preferably the VM allocation management server 3 notifies the physical server 2 (HV 4) of the movement destination of the VM 5 of information relating to an extended instruction set utilized in the physical server 2 of the movement source by the VM 5 to be moved.

### (1-2) Hardware Configuration of Physical Server

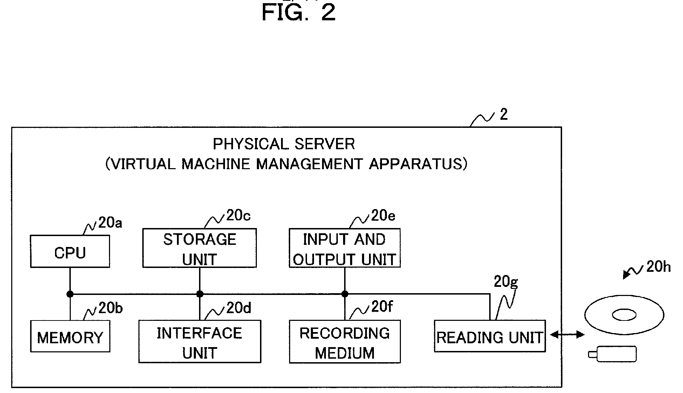

In the following, a hardware configuration of each physical server 2 is described with reference to FIG. 2. FIG. 2 is a view depicting an example of a hardware configuration of the physical servers 2 depicted in FIG. 2.

As depicted in FIG. 2, the physical server 2 includes a CPU 20a, a memory 20b, a storage unit 20c, an interface unit 20d, an input and output unit 20e, a recording medium 20f, and a reading unit 20g.

The CPU 20a is an arithmetic processing unit (processor, processing unit) that is coupled to the memory 20b, storage unit 20c, interface unit 20d, input and output unit 20e, recording medium 20f and reading unit 20g and performs various kinds of controls and arithmetic operations. The CPU 20a executes a program stored in the memory 20b, the storage unit 20c, the recording medium 20f, a recording medium 20h coupled to or loaded in the reading unit 20g, a Read Only Memory (ROM) not depicted or the like to implement various functions of the physical server 2 (for example, the HV 4 and a plurality of VMs 5). It is to be noted that, as the processor, not only the CPU 20a but also an electronic circuit such as a Micro Processing Unit (MPU) may be used.

The memory 20b is a storage device for storing various data and programs. When a program is to be executed, the CPU 20a stores and develops data and the program into and in the memory 20b. It is to be noted that, as the memory 20b, a volatile memory such as, for example, a Random Access Memory (RAM) is available.

The storage unit 20c is one or more pieces of hardware for storing various data, programs and so forth such as a magnetic disk apparatus such as, for example, a Hard Disk Drive (HDD), a semiconductor drive device such as a Solid State Drive (SSD) or a volatile memory such as a flash memory. The storage area the storage unit 20c has is used by the physical server 2, HV 4, VMs 5 or the like.

The interface unit 20d is a controller that performs control of coupling and communication with a host or a client coupled through a router and a network not depicted, the VM allocation management server 3 or a different physical server 2. As the interface unit 20d, for example, an interface card in compliance with a Local Area Network (LAN), a fiber channel (Fibre Chanel; FC) or the like is available.

The input and output unit 20e may include at least one of an input apparatus such as, for example, a mouse or a keyboard and an output apparatus such as a display unit or a printer. For example, the input and output unit 20e is used in various works by a manager of the physical server 2 (information processing system 1), a user of a VM 5 or the like.

The recording medium 20f is a storage device such as a flash memory or a ROM and records various data and programs therein. The reading unit 20g is an apparatus that reads out data or a program recorded in the computer-readable recording medium 20h such as an optical disk or a Universal Serial Bus (USB) memory.

In at least one of the recording media 20f and 20h, a virtual machine management program for implementing functions of the physical server 2 (including the HV 4 and the VMs 5) according to an embodiment may be stored. In particular, the CPU 20a implements functions of the physical server 2 by developing the virtual machine management program outputted from the recording medium 20f or from the recording medium 20h through the reading unit 20g into the storage device such as the memory 20b and executing the virtual machine management program.

It is to be noted that the pieces of hardware described above are coupled for communication with each other through a bus. For example, the CPU 20a, memory 20b and interface unit 20d are coupled with a system bus. Meanwhile, the storage unit 20c, input and output unit 20e, recording medium 20f and reading unit 20g are coupled with the system bus through an Input/Output (I/O) interface or the like. It is to be noted that the storage unit 20c is coupled with an I/O interface such as a Disk Interface (DI) by a storage bus (cable). As the storage bus, a bus in compliance with Small Computer System Interface (SCSI), Serial Attached SCSI (SAS), fiber channel, Serial Advanced Technology Attachment (SATA) or the like is available.

It is to be noted that the above-described hardware configuration of the physical server 2 is exemplary. Accordingly, increase or decrease, division and so forth of the hardware in the physical server 2 may be performed suitably. Or, the physical servers 2 may have configurations different from each other.

It is to be noted that also the VM allocation management server 3 may have a hardware configuration similar to that of the physical server 2.

### (1-3) Functional Configuration of Physical Server

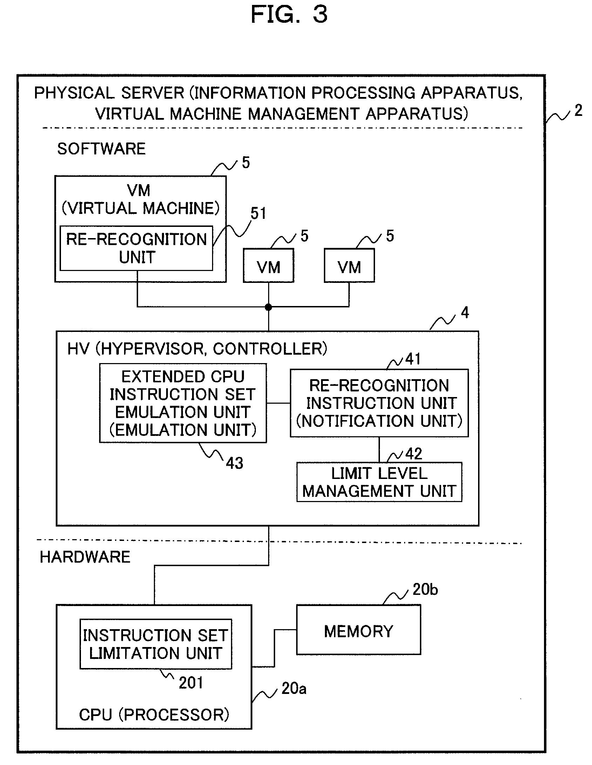

Now, a functional configuration of the physical server 2 is described with reference to FIG. 3. FIG. 3 is a view depicting an example of a functional configuration of the physical server 2 depicted in FIG. 1.

The physical server 2 according to the present embodiment can perform migration between VM hosts between which the level of the extended instruction set of the CPU 20a is different. It is to be noted that, in the following description, it is assumed that the levels of the extended instruction sets of the CPUs 10a provided in the physical servers 2-1 and 2-2 are different from each other.

The physical server 2 includes, as functions of software, a re-recognition instruction unit 41, a limit level management unit 42 and an extended CPU instruction set emulation unit 43 in the HV 4 and includes a re-recognition unit 51 in the VM 5. It is to be noted that the re-recognition instruction unit 41, limit level management unit 42, extended CPU instruction set emulation unit 43 and re-recognition unit 51 are implemented by the CPU 20a developing the virtual machine management program into the memory 20b and executing the virtual machine management program. It is to be noted that the re-recognition unit 51 may be incorporated as one function of the OS executed by the VM 5.

Further, the physical server 2 includes, as a function of hardware, an instruction set limitation unit 201 in the CPU 20a.

It is to be noted that the re-recognition unit 51 of the VM 5 may be provided in each of the VMs 5-1 to 5-6, and the functions of the HV 4, VM 5 and CPU 20a can be provided in each of the physical servers 2-1 and 2-2.

### (1-3-1) Description of Instruction Set Limitation Unit

The instruction set limitation unit 201 is a function for applying utilization limitation of an extended instruction set for each VM 5 and is implemented by the hardware assist function such as "FlexMigration" described hereinabove.

The instruction set limitation unit 201 can limit the extended instruction set to be recognized by a particular VM 5 to a predetermined level in response to an instruction from the HV 4. For example, if an instruction to set the extended instruction set to be utilized by the particular VM 5 to the level 2 (SSE2) is received from the HV 4, then the instruction set limitation unit 201 notifies the VM 5 of the level 2 even if the CPU 20a supports the level 4 (SSE4). In particular, to an inquiry (for example, a CPUID instruction) from the particular VM 5 about an extended instruction set that can be utilized, the instruction set limitation unit 201 issues a response that the utilizable extended instruction set is that of SSE2.

### (1-3-2) Description of Re-Recognition Unit

The re-recognition unit 51 re-recognizes, when the own VM 5 is a target of the migration, an architecture by receiving a notification of information relating to an extended instruction set that can be utilized by the physical server 2 of the movement destination.

Here, the OS or an application frequently tries to make the maximum use of a utilizable extended instruction set. For example, when execution in a physical server or a VM is started, the OS or the application decides a utilizable extended instruction set and performs selection of a library, a compiler output mode or the like that uses the decided extended instruction set. Then, the OS or the application continues to operate using the selected library, compiler output mode or the like until the execution in the physical server or VM stops.

The processes by the OS or the application are common to a case where it operates on a physical server and another case where it operates on a VM. In particular, since the decision of the extended instruction set is performed when execution of the OS or the application is started, the OS or the application executed in a VM does not suppose that the extended instruction set is changed on the way after the start of the execution by the live migration.

Therefore, the re-recognition unit 51 acquires information relating to an extended instruction set that can be utilized in the HV 4 by the own VM 5 from the instruction set limitation unit 201 of the CPU 20a in response to a re-recognition instruction from the HV 4 (re-recognition instruction unit 41). For example, the re-recognition unit 51 acquires information relating to a utilizable extended instruction set from the CPU 20a by issuing a CPUID instruction for inquiring about which extended instruction set is supported by the CPU 20a.

After the re-recognition is performed in response to a re-recognition instruction from the HV 4 by the VM 5, the VM 5 (OS) performs changeover of the process (code) to be conveyed to the CPU 20a.

For example, the VM 5 performs, with regard to a code that can be handled directly by the OS (for example, a kernel, a library or the like), changeover of the used code by the OS. On the other hand, with regard to a code that cannot be handled directly by the OS (for example, a user code or the like), the VM 5 issues a changeover request for the used code to a user program or the like by the OS.

In this manner, with the re-recognition unit 51, not only when execution of the VM 5 (OS) is started (for example, after startup on the HV 4) but also when a re-recognition instruction issued at an arbitrary timing from the HV 4 is received, the VM 5 (OS) can perform re-recognition of the architecture. Further, by re-recognizing a utilizable extended instruction set, the VM 5 can perform changeover of a user code, and therefore, the re-recognized extended instruction set can be utilized effectively as far as possible.

### (1-3-3) Description of Re-Recognition Instruction Unit and Limitation Level Management Unit

The re-recognition instruction unit (notification unit) 41 notifies a VM 5 to be moved by migration of information relating to an extended instruction set that can be utilized in the physical server 2 of the movement destination. For example, if the re-recognition instruction unit 41 is notified of a VM 5 of a movement target of migration from the VM allocation management server 3, then the re-recognition instruction unit 41 issues an instruction for re-recognition of the architecture to the VM 5 conveyed thereto to issue a notification of information relating to the extended instruction set that can be utilized after the movement. Consequently, the HV 4 can provide a trigger for re-recognition of the extended instruction set when migration is to be performed to the VM 5.

In particular, the re-recognition instruction unit 41 issues, upon live migration, a re-recognition instruction to the VM 5 at least at one of timings (a) and (b) described below.
(a) A re-recognition instruction is issued after movement of the VM 5 so that the extended instruction set is changed over (post-changeover method).
(b) A re-recognition instruction is issued before movement of the VM 5 so that the extended instruction set is changed over in advance (pre-changeover method).

It is to be noted that, in the case of the timing (a) above, the re-recognition instruction is issued to the moved VM 5 (after moved) by the HV 4 (re-recognition instruction unit 41) of the physical server 2 of the movement destination. On the other hand, in the case of the timing (b) above, the re-recognition instruction is issued to the VM 5 to be moved (before movement) by the HV 4 (re-recognition instruction unit 41) of the physical server 2 of the movement source. It is to be noted that, at this time, the re-recognition instruction unit 41 changes the information relating to the extended instruction set to be utilized in the physical server 2 by the VM 5 to the information relating to the extended instruction set to be used in the movement destination in advance through an instruction to the instruction set limitation unit 201. Here, the information relating to the extended instruction set may be the level of the extended instruction set described hereinabove or information that specifies the extended instruction set.

The limit level management unit 42 manages the level of a VM 5 to be executed by the own HV 4. For example, the limit level management unit 42 manages a table in which the VM 5 executed by the own HV 4 and the level of the extended instruction set set to the VM 5 by the instruction set limitation unit 201. It is to be noted that this table is stored in the memory 20b or the like.

The limit level management unit 42 acquires, when a VM 5 is added to the subordinate of the own HV 4 or is moved thereto from a different HV 4, the utilization level utilized by the VM 5 from the instruction set limitation unit 201 and adds the acquired utilization level to the table to update the table. Further, when the utilization level of the VM 5 is changed by the instruction set limitation unit 201 or when a VM 5 is moved from the own HV 4 to a different HV 4, the limit level management unit 42 changes the utilization level of the entry of the VM 5 in the table or deletes the entry from the table.

### (1-3-3-1) Decision Technique of Whether or Not Execution of Re-Recognition Instruction by Re-Recognition Instruction Unit Is Possible

Here, description is given of at which one of the timings (a) and (b) the re-recognition instruction unit 41 is to execute issuance of a re-recognition instruction to a VM 5 to be moved.

The re-recognition instruction unit 41 determines an issuance timing of a re-recognition instruction on the basis of the table managed by the limit level management unit 42 and information received from the VM allocation management server 3.

In particular, the re-recognition instruction unit 41 acquires the utilization level of a VM 5 to be moved from the limit level management unit 42 and confirms the utilization level.

Further, if the re-recognition instruction unit 41 of the movement source receives a notification from the VM allocation management server 3 as described above, then the re-recognition instruction unit 41 confirms information relating to an extended instruction set that can be utilized in the physical server 2 of the movement destination (for example, level that can be utilized; utilizable level) conveyed thereto from the VM allocation management server 3 as described hereinabove.

Then, the re-recognition instruction unit 41 of the movement source determines an issuance timing of the re-recognition instruction on the basis of the utilization level in the movement source and the utilizable level in the movement destination of the VM 5 to be moved.

As an example, if the re-recognition instruction unit 41 of the movement source decides that the utilization level in the movement source is higher than the utilizable level in the movement destination, then the re-recognition instruction unit 41 decides to issue a re-recognition instruction before the movement of the VM 5.

Where a VM 5 ismovedfromaphysical server 2 that supports an extended instruction set of a high level to another physical server 2 that supports another extended instruction set of a low level, the VM 5 may fail to utilize an instruction that has been utilized till then. Therefore, if the re-recognition instruction unit 41 of the movement source decides that the extended instruction set to be utilized by the VM 5 to be moved is degenerated by the migration, then it lowers the utilization level of the VM 5 to the utilizable level in the movement destination before the movement (in advance).

Consequently, the re-recognition instruction unit 41 can decrease the probability that an "exception" (for example, "Illegal Instruction") may occur by executing an extended instruction set that has existed before the movement of the VM 5 but does not exist after the movement.

On the other hand, if the re-recognition instruction unit 41 of the movement source decides that the utilization level in the movement source is lower than the utilizable level in the movement destination, then it does not perform re-recognition instruction to the VM 5 before the movement but decides that a re-recognition instruction is to be issued after the movement of the VM 5.

Inparticular, when an extended instruction set utilized by a VM 5 to be moved is extended by the migration, if the re-recognition instruction unit 41 raises the utilization level of the VM 5 to the utilizable level in the movement destination before the movement, then there is the possibility that an "exception" may occur. In other words, there is the possibility that, as a result of raising of the level before movement, the VM 5 may execute an instruction which originally does not exist in the movement source and can be utilized in the movement destination.

Therefore, if the re-recognition instruction unit 41 of the movement source decides that the extended instruction set to be utilized by a VM 5 to be moved is extended by the migration, then it does not perform re-recognition instruction to the VM 5 before the movement. In this case, the re-recognition instruction unit 41 of the movement source may issue a request for issuance of a re-recognition instruction of the moved VM 5 to the re-recognition instruction unit 41 of the movement destination or may issue a notification of a result of comparison of the levels before and after the movement of the VM 5 to be moved.

It is to be noted that, if the re-recognition instruction unit 41 of the movement source decides that the utilization level in the movement source is equal to the utilizable level in the movement destination, then it decides that issuance of a re-recognition is not to be performed.

The re-recognition instruction unit 41 of the movement source determines an issuance timing of a re-recognition instruction in such a manner as described above.

On the other hand, if movement of a VM 5 by live migration is executed by the VM allocation management server 3, then the re-recognition instruction unit 41 decides whether or not a re-recognition instruction is to be issued to the moved VM 5. This decision may be performed depending upon whether an issuance request for a re-recognition instruction is received from the re-recognition instruction unit 41 of the movement source or may be performed, in a case where a comparison result of the levels before and after the movement of the moved VM 5 is received, on the basis of the comparison result.

It is to be noted that the re-recognition instruction unit 41 of the movement destination may compare the levels before and after the movement of the moved VM 5 similarly to the re-recognition instruction unit 41 of the movement source described above.

For example, the re-recognition instruction unit 41 of the movement destination confirms information (for example, the utilization level) conveyed thereto from the VM allocation management server 3 as described above and relating to the extended instruction set having been utilized in the physical server 2 of the movement source by the moved VM 5. Further, the re-recognition instruction unit 41 of the movement destination acquires the utilizable level in the own HV 4 by the moved VM 5 from the limit level management unit 42 and confirms the acquired utilizable level. Then, the re-recognition instruction unit 41 of the movement destination may compare the utilization level in the movement source of the moved VM 5 and the utilizable level in the own HV 4 with each other to obtain a comparison result.

In this manner, the re-recognition instruction unit 41 of the movement destination decides on the basis of the comparison result of the levels obtained by the own HV 4 or the comparison result conveyed thereto from the movement source whether or not the utilization level in the movement source of the VM 5 is lower than (has been extended from) the utilizable level in the own HV 4.

Then, if the re-recognition instruction unit 41 of the movement destination decides that the utilization level has been extended, or if the re-recognition instruction unit 41 receives an issuance request for a re-recognition instruction from the movement source, then it issues a re-recognition instruction to the moved VM 5.

It is to be noted that the CPU 20a of the physical server 2 of the movement destination executes control of the moved VM 5 using an extended instruction set that can be utilized by the physical server 2 of the movement destination.
In this manner, the re-recognition instruction unit 41 of the movement destination issues a re-recognition instruction to the moved VM 5 when the moved VM 5 has not performed re-recognition in the HV 4 of the movement source.
It is to be noted that the re-recognition instruction units 41 of the movement source and the movement destination may exchange (confirm) the utilization level in the movement source and the utilizable level in the movement destination of the VM 5 to be moved by performing a negotiation with each other.

Further, in the foregoing description of the example, it is described that an issuance timing of a re-recognition instruction is determined by comparison in magnitude between the utilization level in the movement source and the utilizable level in the movement destination of the VM 5 to be moved. However, the determination of the issuance timing of a re-recognition instruction is not limited to this.

For example, after the VM 5 receives a re-recognition instruction and performs re-recognition as described above, it performs changeover of the process (code) to be designated to the CPU 20a after the re-recognition. At this time, the VM 5 performs such a process as invalidating, in regard to at least an instruction that is disabled for utilization through the re-recognition, a code compiled already including the instruction and performing compile again using utilizable instructions. Where such a process as just described is executed, for example, by the HV 4 of the movement source, it can make a cause of increase of the load to the VM host (HV 4) and delaying processing including the migration.

Therefore, also when it is decided that the utilization level in the movement source is higher than the utilizable level in the movement destination, in a case where it is estimated that the processing load by changeover by the VM 5 becomes high, the re-recognition instruction unit 41 of the movement source may omit to issue a re-recognition instruction. In this case, the re-recognition instruction unit 41 of the movement source may request issuance of a re-recognition instruction to the movement VM 5 to the re-recognition instruction unit 41 of the movement destination or may notify the re-recognition instruction unit 41 of the movement destination that the re-recognition instruction unit 41 of the movement source will not issue a re-recognition instruction (reason or the like).

It is to be noted that, for example, when the difference between the utilization level in the movement source and the utilizable level in the movement destination is greater than a predetermined value, the re-recognition instruction unit 41 can estimate that the processing load by the code changeover by the VM 5 becomes high. This is because it can be considered that, when the level difference is great, the number of instructions which cannot be used in the movement destination is great and the number of codes for which re-compile is to be performed by the VM 5 increases.

In this manner, with the re-recognition instruction unit 41 and the limit level management unit 42, re-recognition instruction to the VM 5 to be moved can be executed selectively before or after movement so that no "exception" occurs or/and processing of the migration is not delayed. Accordingly, the stability of the information processing system 1 can be improved.

### (1-3-3-2) Re-Recognition Instruction Technique to Re-Recognition Unit by Re-Recognition Instruction Unit

The re-recognition instruction unit 41 can notify the re-recognition unit 51 of the VM 5 of a re-recognition instruction by one of techniques (A) to (D) described below.

### ·Technique by interrupt

(A) An interrupt for re-recognition of the architecture is set (prescribed) to the VM 5 side in advance. The re-recognition instruction unit 41 (HV 4) causes the VM 5 (re-recognition unit 51) to recognize that an interrupt has occurred by causing the set interrupt (performing interrupt injection).
(B) The HV 4 sets virtual hardware and a driver for the virtual hardware to the VM 5 (OS) as an interrupt source. This driver is set such that, if an interrupt occurs, then it causes the VM 5 (re-recognition unit 51) to recognize that a re-recognition instruction has been issued. The re-recognition instruction unit 41 causes the driver of the VM 5 (OS) to cause an interrupt from the virtual hardware.
(C) The HV 4 sets an interrupt vector wherein it is an interrupt cause that a re-recognition instruction has been issued to the VM 5 (re-recognition unit 51) to the VM 5 (OS) as an interrupt source. The re-recognition instruction unit 41 causes an interrupt on the basis of the interrupt vector.

### ·Technique by handler registration

(D) The VM 5 registers a handler for re-recognition of the architecture into the OS and notifies the HV 4 of the handler. The re-recognition instruction unit 41 issues the handler conveyed thereto from the VM 5 in response to an event (issuance of a re-recognition instruction) to cause the VM 5 (re-recognition unit 51) to recognize that a re-recognition instruction has been issued.

It is to be noted that the techniques (A) to (D) above are exemplary, and the technique for re-recognition instruction is not limited to them but various known technique can be applied.

### (1-3-4) Description of Extended CPU Instruction Set Emulation Unit

The extended CPU instruction set emulation unit (emulation unit) 43 performs, when an instruction included in the extended instruction set of the movement source but not included in the extended instruction set of the movement destination is executed by the movement VM 5, emulation of the executed instruction.

In particular, the extended CPU instruction set emulation unit 43 executes such emulation as described above in a case where, although a re-recognition instruction is issued to the VM 5 to be moved, before or after the movement by the re-recognition instruction unit 41, an effect is not obtained (when an "exception" occurs).

As a case in which an "exception" occurs although a re-recognition instruction is issued to the VM 5, a case in which the VM 5 (OS) ignores the re-recognition instruction or another case in which the VM 5 (OS) or the application (user program) is not ready for re-recognition is available.

In particular, the extended CPU instruction set emulation unit 43 monitors instructions executed by the VMs 5, and if it recognizes that an instruction issued by a certain VM 5 (for example, the moved VM 5) gives rise to an "exception", then it traps the instruction.

Further, the extended CPU instruction set emulation unit 43 confirms the instruction level of the extended instruction set in the movement source of the VM 5 that has executed the instruction that has given rise to the "exception" (exception causing instruction) and decides whether or not the instruction can be utilized in the movement source. It is to be noted that the extended CPU instruction set emulation unit 43 may specify the HV 4 of the movement source of the VM 5 that has issued the exception causing instruction and the instruction level, for example, by issuing an enquiry to the VM 5 that has issued the instruction. Or, the HV 4 may store information acquired upon migration into the memory 20b or the like in advance, and the extended CPU instruction set emulation unit 43 may acquire the information from the memory 20b or the like.

If the extended CPU instruction set emulation unit 43 decides that the exception causing instruction is not an instruction utilizable in the movement source, then it decides that the occurrence of an "exception" by the instruction does not arise from execution of re-recognition by the VM 5 and transits to an ordinary instruction exception process.

On the other hand, if the extended CPU instruction set emulation unit 43 decides that the exception causing instruction is an instruction utilizable in the movement source, then it executes emulation of the instruction.

Further, if the extended CPU instruction set emulation unit 43 executes emulation of an exception causing instruction, then it decides whether or not a re-recognition instruction is to be issued again to the VM 5. This decision may be performed, for example, depending upon whether or not an "exception" by the exception causing instruction" has occurred by more than a predetermined number of times.

For example, if the extended CPU instruction set emulation unit 43 decides that an "exception" by the exception causing instruction" has occurred by more than the predetermined number of times and a re-recognition instruction is to be issued again, then it requests the re-recognition instruction unit 41 for re-recognition instruction again to the VM 5.

It is to be noted that, in the re-recognition instruction for the second time, the re-recognition instruction unit 41 may issue a request (enquiry) to the VM 5 to stop the issuance source of the exception causing instruction (for example, a user program) in response to the degree of importance.

Then, if the extended CPU instruction set emulation unit 43 issues a request for re-recognition instruction again to the re-recognition instruction unit 41 or decides that a re-recognition instruction is not to be issued again, then it performs returning from the "exception".

In this manner, with the extended CPU instruction set emulation unit 43, even if aninstructionof an extended instruction set that is not performed in the VM host (HV 4) of the movement destination is issued, occurrence of an "exception" can be suppressed. Further, with the extended CPU instruction set emulation unit 43 , since a request for re-recognition instruction to the VM 5 for the second time is issued to the re-recognition instruction unit 41, the probability in occurrence of an exception causing instruction can be reduced.

It is to be noted that the extended CPU instruction set emulation unit 43 preferably is ready for instructions of all CPUs 20a so that it can emulate extended instruction sets executed by all physical servers 2 (CPUs 20a) provided in the information processing system 1.

### (1-4) Example of Operation

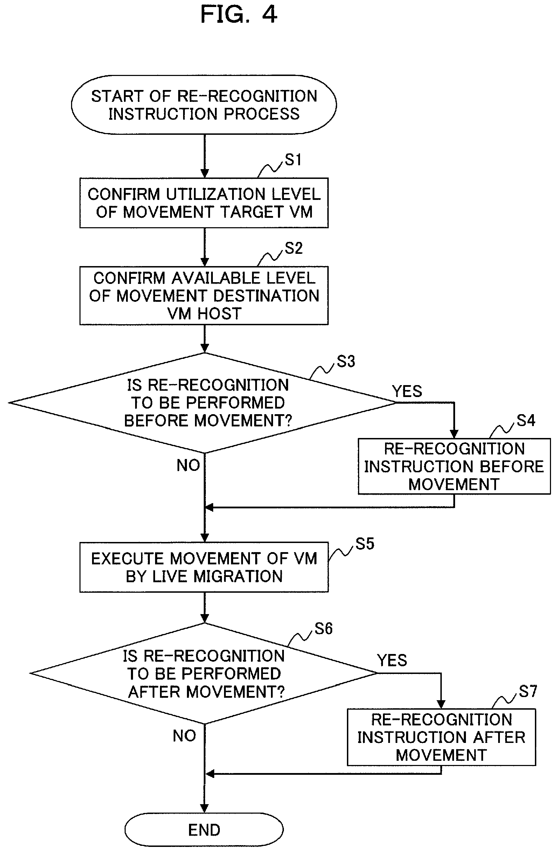

Now, an example of operation of the physical server 2 in the information processing system 1 as an example of the embodiment configured in such a manner as described above is described with reference to FIGS. 4 to 7.

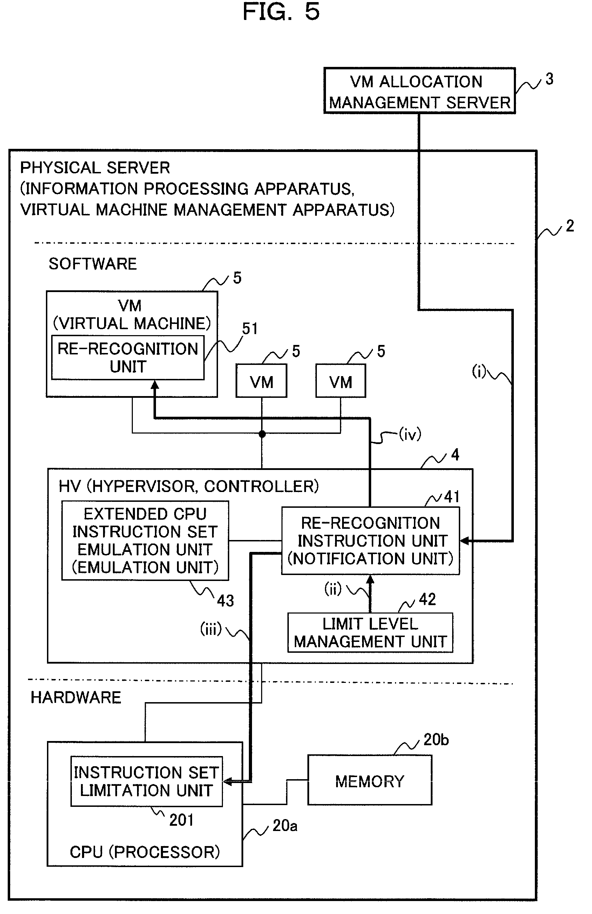

FIG. 4 is a flow chart illustrating an example of a migration process by the physical server 2 depicted in FIG. 3, and FIG. 5 is a view illustrating an example of the migration process by the physical server 2 depicted in FIG. 2.

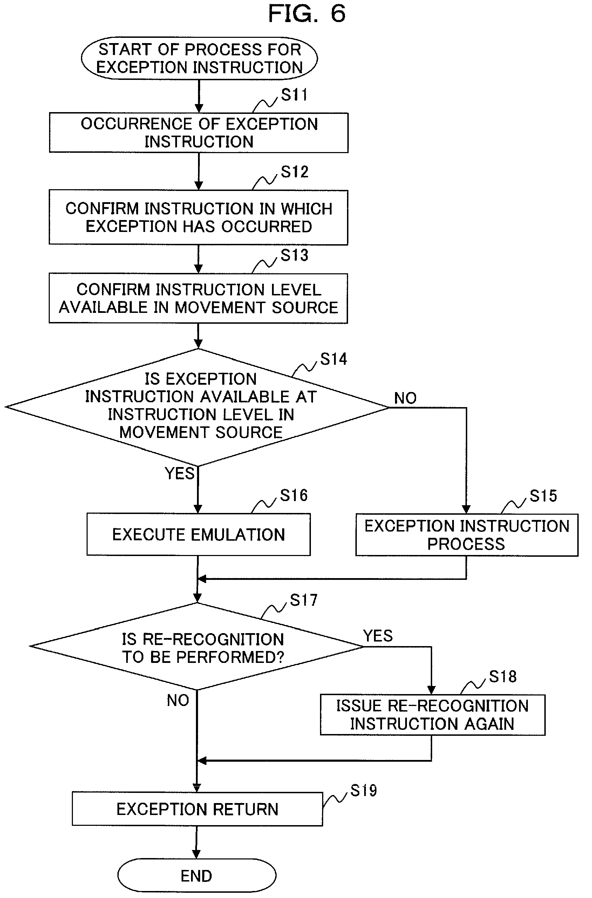

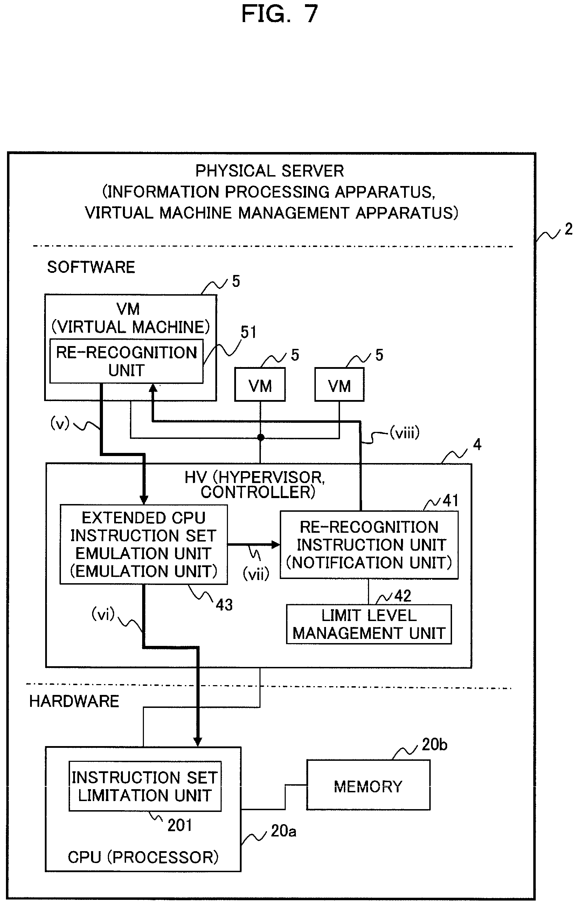

FIG. 6 is a flow chart illustrating an example of a process for an exception causing instruction by the physical server 2 depicted in FIG. 3, and FIG. 7 is a view depicting an example of the process for the exception causing instruction by the physical server 2 depicted in FIG. 3.

It is to be noted that FIG. 5 is used commonly in the description of processing of both of the physical servers 2 of the movement source and the movement destination of a VM 5 . Further, FIG. 7 is used for the description of processing of the physical server 2 of the re-recognition instruction of a VM 5.

### (1-4-1) Migration Process

First, a migration (live migration) process by the physical server 2 is described with reference to FIGS. 4 and 5.

If a notification of performance (request for re-recognition instruction) of migration is issued from the VM allocation management server 3 to an HV 4 of the movement source (transfer source) of a VM 5 (refer to an arrow mark (i) of FIG. 5), then the utilization level of the VM 5 of the movement target (transfer target) is confirmed by the re-recognition instruction unit 41 (step S1 of FIG. 4). At this time, the re-recognition instruction unit 41 acquires the utilization level of the VM 5 of the movement target from the limit level management unit 42 (refer to an arrow mark (ii) of FIG. 5).

Then, the utilizable level in the VM host (HV 4) of the movement destination (transfer destination) is confirmed by the re-recognition instruction unit 41 as depicted in FIG. 4 (step S2).

Then, it is decided by the re-recognition instruction unit 41 whether or not re-recognition of the utilization level of the extended instruction set by the VM 5 is to be performed before the movement (step S3). If it is decided by the re-recognition instruction unit 41 that, for example, the extended instruction set to be utilized by the VM 5 to be moved is degenerated by the migration, then it is decided that re-recognition before the movement is to be performed (Yes route at step S3), and the processing advances to step S4.

At step S4, a re-recognition instruction before the movement is issued to the VM 5 to be moved by the re-recognition instruction unit 41, whereafter the processing advances to step S5. It is to be noted that, at this time, the re-recognition instruction unit 41 performs instruction to the instruction set limitation unit 201 of the CPU 20a to change the utilization level of the VM 5 of the movement target to the utilizable level in the movement destination (refer to an arrow mark (iii) of FIG. 5). Then, the re-recognition instruction unit 41 issues a re-recognition instruction to cause the re-recognition unit 51 of the VM 5 of the movement target to re-recognize the changed extended instruction set (utilization level) (refer to an arrow mark (iv) of FIG. 5) .

On the other hand, if it is decided by the re-recognition instruction unit 41 that, for example, the extended instruction set to be utilized by the VM 5 to be moved is extended by the migration or there is no change of the utilization level, then it is decided that re-recognition before the movement is not to be performed (No route at step S3). Then, the processing advances to step S5.

At step S5, movement of the VM 5 by live migration is executed by the VM allocation management server 3 and the physical servers 2 of the movement source and the movement destination.

If the live migration is completed and a notification of the completion is issued from the VM allocation management server 3 (refer to an arrow mark (i) of FIG. 5), then it is decided by the re-recognition instruction unit 41 of the movement destination whether or not re-recognition of the utilization level of the extended instruction set by the VM 5 is to be performed after the movement (step S6). It is to be noted that the decision may be performed on the basis of presence or absence of a request for issuance of a re-recognition instruction from the re-recognition instruction unit 41 of the movement source, a result of the comparison of the levels before and after the movement received from the movement source or a result of comparison of the levels before and after the movement by the re-recognition instruction unit 41 of the movement destination as described hereinabove.

If it is decided by the re-recognition instruction unit 41 of the movement destination that re-recognition after the movement is to be performed (Yes route at step S6), then the processing advances to step S7.

At step S7, a re-recognition instruction after the movement is issued to the moved VM 5 by the re-recognition instruction unit 41, and the processing ends therewith. It is to be noted that, at this time, the re-recognition instruction unit 41 issues a re-recognition instruction to the re-recognition unit 51 of the VM 5 of the movement target to re-recognize the extended instruction set (utilization level) of the VM host of the movement destination (refer to an arrow mark (iv) of FIG. 5).

On the other hand, if it is decided by the re-recognition instruction unit 41 that re-recognition after the movement is not to be performed (No route at step S6), then the processing ends.

It is to be noted that the re-recognition instruction units 41 of the movement source and the movement destination may perform negotiation with each other to exchange (confirm) the utilization level in the movement source and the utilizable level in the movement destination of the VM 5 to be moved at steps S1 to S3 and S6.

In this manner, with the physical server 2 according to the first embodiment, since the VM 5 can perform re-recognition of the architecture before and after the movement, it can be moved to a physical server 2 in which a different extended instruction set is applied. Further, since the VM 5 can be ready for an extended instruction set applied in the movement destination, the extended instruction set in the movement destination need not be restricted, and the VM 5 can make the most of the function of the extended instruction set in each VM host (HV 4).

Accordingly, in the informationprocessing system 1 that permits movement of a VM 5 between physical servers 2, the utilization efficiency of the information processing system 1 by the VM 5 can be improved.

### (1-4-2) Process for Exception Causing Instruction

Now, a process for the exception causing instruction by a physical server 2 is described.

If an instruction is issued by a VM 5 (refer to an arrow mark (v) of FIG. 7), then the issued instruction is monitored by the extended CPU instruction set emulation unit 43. If an "exception" by the instruction issued from the VM 5 occurs (step 5511 of FIG. 6), then the exception causing instruction is confirmed by the extended CPU instruction set emulation unit 43 (step S12) .

Further, the movement source of the VM 5 from which the exception causing instruction has been issued is specified and the instruction level utilizable in the movement source is confirmed by the extended CPU instruction set emulation unit 43 (step S13).

Then, it is decided by the extended CPU instruction set emulation unit 43 whether or not the exception causing instruction can be utilized by the instruction level of the movement source (step S14). If the exception causing instruction cannot be utilized by the instruction level of the movement source (No route at step S14), then an ordinary instruction exception process is executed by the extended CPU instruction set emulation unit 43 (step S15). Thereafter, the processing advances to step S17.

On the other hand, if the exception causing instruction can be utilized by the instruction level of the movement source (Yes route at step S14), then emulation of the instruction is executed by the extended CPU instruction set emulation unit 43 (step S16). Thereafter, the processing advances to step S17. It is to be noted that, at step S1, emulation of the exception causing instruction is executed by the CPU 20a (refer to an arrow mark (vi) of FIG. 7).

At step S17, it is decided by the extended CPU instruction set emulation unit 43 whether or not re-recognition of the VM 5 is to be executed again. It is to be noted that this decision is performed, for example, on the basis of whether or not an "exception" by the exception causing instruction has occurred by more than a predetermined number of times. If it is decided that re-recognition for the second time is to be executed (Yes route at step S17), then a request for issuance of a re-recognition instruction for the second time is issued to the re-recognition instruction unit 41 by the extended CPU instruction set emulation unit 43 (step S18, refer to an arrow mark (vii) of FIG. 7). It is to be noted that, if the issuance request for a re-recognition instruction for the second time is received, then the re-recognition instruction unit 41 issues a re-recognition instruction to the target VM 5 (refer to an arrow mark (viii) of FIG. 7). Then, the processing advances to step S19.

On the other hand, if it is decided at step S17 that re-recognition for the second time is not to be performed (No route at step S17), then the processing advances to step S19.

At step S19, returning from the "exception" is performed for the exception causing instruction by the extended CPU instruction set emulation unit 43, and the processing is ended therewith.

### (2) First Modification

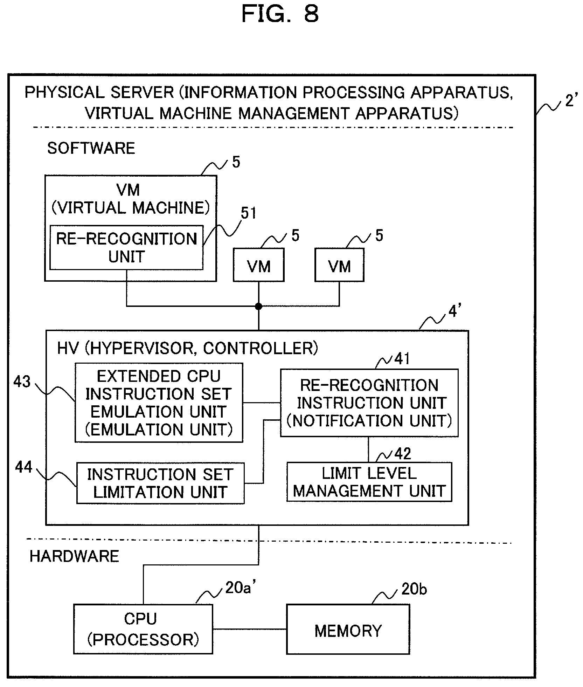

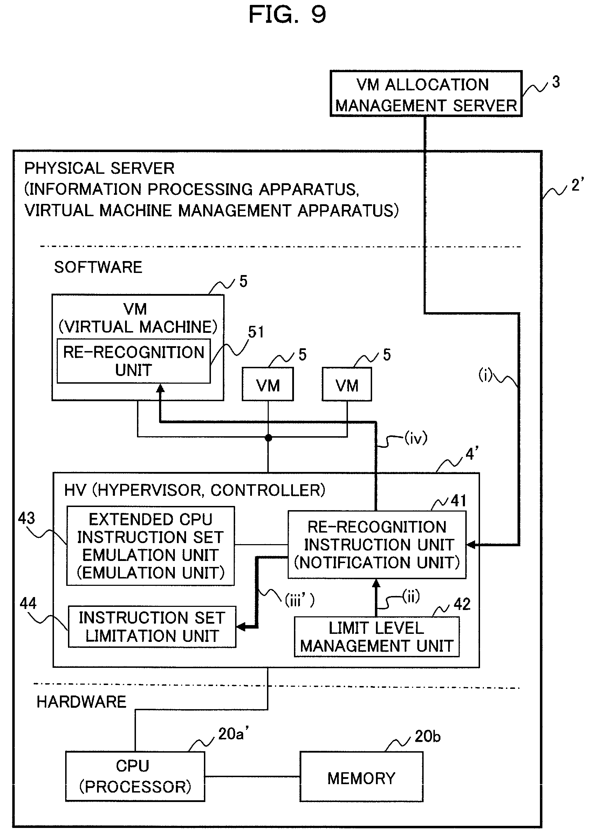

Now, a first modification to the embodiment is described with reference to FIGS. 8 and 9.

FIG. 8 is a view depicting a first modification to the configuration of the physical server 2 depicted in FIG. 1, and FIG. 9 is a view illustrating an example of a migration process by a physical server 2' depicted in FIG. 8.

As depicted in FIG. 8, the physical server 2' according to the first modification is different from the physical server 2 depicted in FIG. 3 in that an HV 4' further includes an instruction set limitation unit 44 and a CPU 20a' does not include the instruction set limitation unit 201.

It is to be noted that, in FIG. 8, like reference characters to those depicted in FIG. 3 denote like or substantially like elements to those depicted in FIG. 3, and therefore, overlapping description of them is omitted. Further, in FIG. 9, like reference characters depicted in FIG. 5 denote like or substantially like processes to those depicted in FIG. 5, and therefore, overlapping description of them is omitted.

The instruction set limitation unit 44 implements a function similar to that of the instruction set limitation unit 201 by the HV 4' (software). In particular, the instruction set limitation unit 44 can apply a utilization limitation to an extended instruction set for each VM 5 in response to a changing request for the utilization level of the extended instruction set from the re-recognition instruction unit 41 (refer to an arrow mark (iii') of FIG. 9).

Further, the instruction set limitation unit 44 performs response of information relating to a utilizable extended instruction set to an enquiry (for example, a CPUID instruction) about a utilizable extended instruction set from a particular VM 5 (OS).

For example, if the HV 4 depicted in FIG. 3 receives an acquisition request for information relating to an extended instruction set such as a CPUID instruction from the re-recognition unit 51, then it passes the request to the instruction set limitation unit 201 of the CPU 20a and returns a response from the instruction set limitation unit 201 to the re-recognition unit 51.

On the other hand, if the HV4'depicted in FIG. 8 receives an acquisition request for information relating to an extended instruction set such as a CPUID instruction from the re-recognition unit 51, then it performs intercept to inhibit transfer to the CPU 20a' and passes the acquisition request to the instruction set limitation unit 44. Then, the HV 4' returns a response from the instruction set limitation unit 44 as a response from the CPU 20a' to the re-recognition unit 51.

In this manner, with the physical server 2' according to the first modification to the embodiment, a similar effect to that achieved by the embodiment can be achieved.

Further, with the physical server 2', even where the CPU 20a does not include the instruction set limitation unit 201, a function similar to that of the instruction set limitation unit 201 can be implemented by processing of software by the HV 4' (instruction set limitation unit 44), and the convenience is high.

### (3) Second Modification

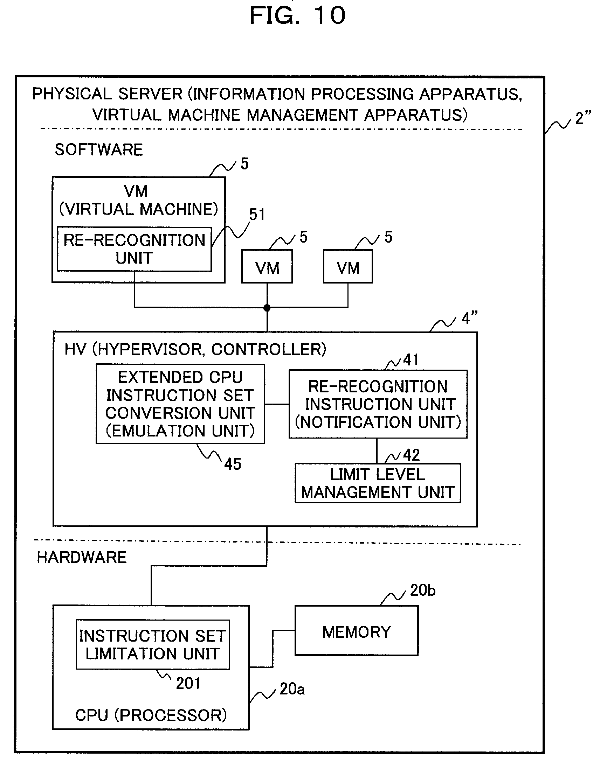

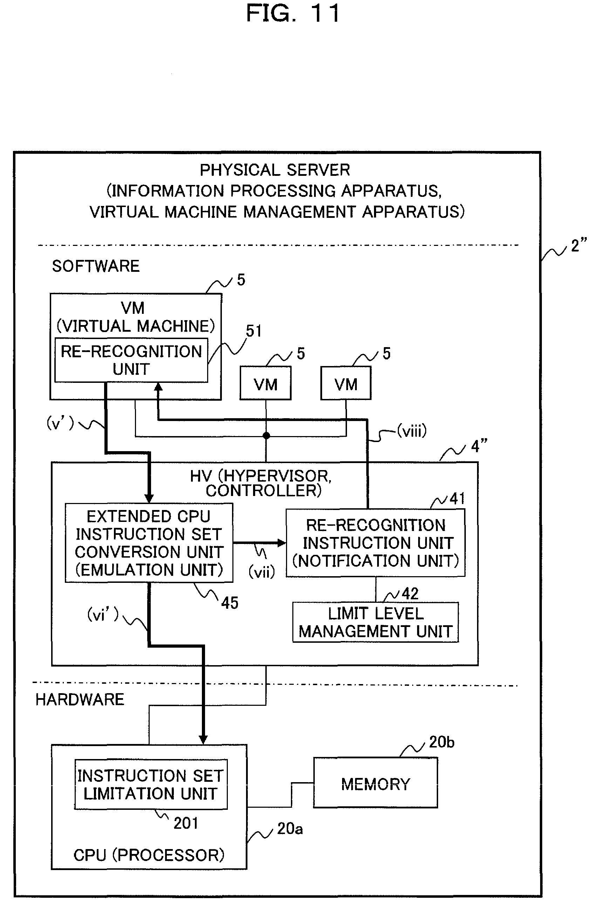

Now, a second modification to the embodiment is described with reference to FIGS. 10 and 11.

FIG. 10 is a view depicting a second modification to the configuration of the physical server 2 depicted in FIG. 1, and FIG. 11 is a view illustrating an example of processing for an exception causing instruction by a physical server 2" depicted in FIG. 10.

As depicted in FIG. 10, the physical server 2" according to the second modification is different from the physical server 2 depicted in FIG. 3 in that an HV 4" includes an extended CPU instruction set conversion unit 45 in place of the extended CPU instruction set emulation unit 43.

It is to be noted that, in FIG. 10, like reference characters to those depicted in FIG. 3 denote like or substantially like elements depicted in FIG. 3, and therefore, overlapping description of them is omitted. Further, in FIG. 11, like reference characters to those depicted in FIG. 7 denote like or substantially like processes depicted in FIG. 7, and therefore, overlapping description of them is omitted.

The extended CPU instruction set conversion unit (emulation unit) 45 can perform emulation of a trapped exception causing instruction similarly to the extended CPU instruction set emulation unit 43.

Further, if the extended CPU instruction set conversion unit 45 has performed emulation for an exception causing instruction executed by the VM 5 before, then it changes the instruction to another instruction (rewrites the codes) that can be executed by the CPU 20a.

For example, the processing time for emulation of an instruction by the HV 4 is 10 times or more the processing time of the instruction by the CPU 20a, and therefore, an increase of the execution frequency of emulation makes a cause of processing delay. Further, if a trap is performed by the HV 4", then since the operation of the CPU 20a changes, also an increase of the execution frequency of a trap makes a cause of processing delay.

Therefore, the extended CPU instruction set conversion unit 45 performs, for an exception causing instruction for which emulation has been performed before, conversion of the exception causing instruction in place of emulation to lower the execution frequency of emulation and trap. In particular, the extended CPU instruction set conversion unit 45 confirms the exception causing instruction (refer to an arrow mark (v') of FIG. 11), and if it decides that emulation has been performed before, then it performs conversion of the exception causing instruction by one of the following techniques (I) to (III).
(I) The extended CPU instruction set conversion unit 45 rewrites the exception causing instruction into a code that can be executed by the CPU 20a (applies a binary patch).
(II) The extended CPU instruction set conversion unit 45 rewrites the exception causing instruction to a jump to an alternative process and describes a process that can be executed by the CPU 20a and a return to the jump source in the jump destination.
(III) The extended CPU instruction set conversion unit 45 scans instruction contents of the program developed in the memory 20b and including the exception causing instruction and performs compile (binary compile) of rewriting the exception causing instruction into an instruction that can be executed by the CPU 20a.

Then, the extended CPU instruction set conversion unit 45 passes the instruction obtained by the conversion by one of the techniques (I) to (III) described above to the CPU 20a (refer to an arrow mark (vi') of FIG. 11).

It is to be noted that the techniques (I) to (III) described above are exemplary, and various known techniques can be used for the conversion process of an exception causing instruction without being limited to those described above.

In this manner, with the physical server 2" according to the second modification to the embodiment, an effect similar to that achieved by the embodiment can be achieved.

Further, with the physical server2" , since it ispossible to lower the execution frequency of emulation and trap, it is possible to moderate the processing delay by the physical server 2" and the performance of the information processing system 1 can be improved.

### (4) Others

While the preferred embodiment of the present invention has been described in detail above, the present invention is not limited to such a specific embodiment as described above, but various modifications and alterations can be made without departing from the subject matter of the present invention.

For example, while it is described that the information processing system 1 according to any one the embodiment and the first and second modifications includes two physical servers 2 to 2" and three VMs 5, the information processing system is not limited to this and may include an arbitrary number of physical servers 2 to 2" and an arbitrary number of VMs 5.

Further, the functions of the physical servers 2 to 2" according to the embodiment and the first and second modifications may be combined arbitrarily.

It is to be noted that all or part of the functions of the physical servers 2 to 2" according to the embodiment and the first and second modifications may be implemented by execution of a predetermined program by a computer (including a CPU, an information processing apparatus and various terminals).

The program is provided in the form in which it is recorded on a computer-readable recording medium (for example, the recording medium 20h depicted in FIG. 2) such as, for example, a flexible disk, a CD, a DVD or a blue ray disk. It is to be noted that, as the CD, a CD-ROM, a CD-R, a CD-RW and so forth are available. Meanwhile, as the DVD, a DVD-ROM, a DVD-RAM, a DVD-R, a DVD-RW, a DVD+R, a DVD+RW and so forth are available. In this case, a computer reads the program from the recording medium and transfers and stores the program to and into an internal storage device or an external storage device and then uses the program.

Here, the computer is a concept including hardware and an OS and signifies hardware that operates under the control of the OS. Meanwhile, where no OS is required and hardware operates solely by an application program, the hardware itself corresponds to a computer. The hardware includes at least a microprocessor such as a CPU and means for reading the computer program recorded in the recording medium. The program described above includes program codes for causing such a computer as described above to implement the various functions of the physical servers 2 to 2" according to the embodiment and the first and second modifications. Further, part of the functions may be implemented not by an application program but by the OS.

### DESCRIPTION OF REFERENCE CHARACTERS

1 information processing system
2, 2', 2", 2-1, 2-2 physical server (information processing apparatus, virtual machine management apparatus)
3 VM allocation management server
4, 4', 4", 4-1, 4-2 HV (hypervisor, controller)
5, 5-1 to 5-6 VM (virtual machine)
20a, 20a' CPU (processor, processing unit)
20b memory
20c storage unit
20d interface unit
20e input and output unit
20f, 20h recording medium
20g reading unit
41 re-recognition instruction unit
42 limit level management unit
43 extended CPU instruction set emulation unit (emulation unit)
44, 201 instruction set limitation unit
45 extended CPU instruction set conversion unit (emulation unit)
51 re-recognition unit

## Claims

1. A virtual machine management method, comprising:
permitting movement of a virtual machine to a first information processing apparatus that controls a virtual machine using a first instruction set, from a second informationprocessing apparatus that controls a virtual machine using a second instruction set;
issuing a notification of information relating to the first instruction set to the virtual machine to be moved from the second information processing apparatus to the first information processing apparatus; and
executing, by the first information processing apparatus, control for the moved virtual machine using the first instruction set.

2. The virtual machine management method according to claim 1,
wherein the issuing of the notification is performed in accordance with an instruction for causing the virtual machine to be moved to recognize an instruction set used for control of the virtual machine to be moved, before or after movement of the virtual machine based on a level of the first instruction set and a level of the second instruction set.

3. The virtual machine management method according to claim 2,
wherein the issuing of the notification includes;
by the second information processing apparatus,
changing information relating to the instruction set used for control of the virtual machine to be moved from information relating to the second instruction set to the information relating to the first instruction set; and
performing the issuing of the instruction for causing the virtual machine to be moved to recognize the information relating to the changed instruction set.

4. The virtual machine management method according to claim 2,
wherein the issuing of the notification includes:
by the first information processing apparatus,
performing the issuing of the instruction for causing the moved virtual machine to recognize information relating to an instruction set used for control of the moved virtual machine.

5. The virtual machine management method according to any one of claims 2 to 4,
wherein the issuing of the notification is performed in accordance with at least one of a process that a first controller or a second controller performs the issuing of the instruction by generating an interrupt to the virtual machine to be moved, and another process that the first or second controller executes a handler indicating the instruction registered by the virtual machine to be moved, the first controller controlling a virtual machine that is to operate in the first information processing apparatus, and the second controller controlling a virtual machine that is to operate in the second information processing apparatus.

6. The virtual machine management method according to any one of claims 1 to 5, further comprising:
by the first information processing apparatus,
performing, when an instruction included in the second instruction set but not included in the first instruction set is executed in the first information processing apparatus by the moved virtual machine, emulation of the executed instruction, and
performing issuance of a notification of the information relating to the first instruction set again to the moved virtual machine.

7. The virtual machine management method according to claim 6, further comprising:
by the first information processing apparatus, in a case where emulation has been performed before relating to the executed instruction, converting the executed instruction into an instruction capable of being executed by the first information processing apparatus.

8. A virtual machine management apparatus served as a first virtual machine management apparatus that controls a virtual machine using a first instruction set, the virtual machine management apparatus comprising:
a controller configured to permit movement of a virtual machine from a second virtual machine management apparatus that controls a virtual machine using a second instruction set;
wherein the controller includes a notification unit configured to issue a notification of information relating to the first instruction set to a virtual machine to be moved from the second virtual machine management apparatus to the first virtual machine management apparatus; and
wherein the first virtual machine management apparatus further comprises a processor configured to execute control using the first instruction set for the moved virtual machine.

9. The virtual machine management apparatus according to claim 8,
wherein the notification unit performs the issuing of the notification for causing the virtual machine to be moved to recognize an instruction set to be used for control of the virtual machine to be moved, before or after movement of the virtual machine based on a level of the first instruction set and a level of the second instruction set.

10. The virtual machine management apparatus according to claim 9,
wherein the controller permits movement of the virtual machine from the first virtual machine management apparatus to the second virtual machine management apparatus;
wherein the first virtual machine management apparatus further comprises an instruction set limitation unit configured to change information relating to an instruction set to be used for control of a virtual machine to be moved from the first virtual machine management apparatus to the second virtual machine management apparatus from the information relating to the first instruction set to the information relating to the second instruction set; and
wherein the notification unit performs the issuing of the instruction for causing the virtual machine to be moved from the first virtual machine management apparatus to the second virtual machine management apparatus to recognize the information relating to the changed instruction set.

11. The virtual machine management apparatus according to claim 9,
wherein the notification unit performs the issuing of the instruction for causing the virtual machine to be moved to recognize the information relating to the instruction set to be used for control of the moved virtual machine.

12. The virtual machine management apparatus according to any one of claims 8 to 11, further comprising:
an emulation unit configured to perform, in a case where an instruction included in the second instruction set but not included in the first instruction set is executed in the first virtual machine management apparatus by the moved virtual machine, emulation of the executed instruction;
wherein the notification unit issues a notification of the information relating to the first instruction set again to the moved virtual machine.

13. The virtual machine management apparatus according to claim 12,
wherein, in a case where emulation has been performed before relating to the executed instruction, the emulation unit converts the executed instruction into an instruction capable of being executed by the first virtual machine management apparatus.

14. A virtual machine management program for causing a first computer that controls a virtual machine using a first instruction set to execute:
permitting movement of a virtual machine from a second computer that controls a virtual machine using a second instruction set;
issuing a notification of information relating to the first instruction set to a virtual machine to be moved from the second computer to the first computer; and
executing control for the moved virtual machine using the first instruction set.

15. The virtual machine management program according to claim 14,
wherein the issuing of the notification is performed in accordance with an instruction for causing the virtual machine to be moved to recognize an instruction set used for control of the virtual machine to be moved, before or after movement of the virtual machine based on a level of the first instruction set and a level of the second instruction set.

16. The virtual machine management program according to claim 15,
wherein the program causes the first computer to execute:
permitting movement of the virtual machine from the first computer to the second computer; and
changing information relating to an instruction set to be used for control of the virtual machine to be moved from the first computer to the second computer from information relating to the first instruction set to the information relating to the second instruction set;
wherein the issuing of the notification is performed in accordance with the instruction for causing the virtual machine to be moved from the first computer to the second computer to recognize the information relating to the changed instruction set.

17. The virtual machine management program according to claim 15,
wherein the issuing of the notification is performed in accordance with the instruction for causing the virtual machine to be moved to recognize information relating to the instruction set to be used for control of the moved virtual machine.

18. The virtual machine management program according to any one of claims 15 to 17,
wherein the issuing of the notification is executed in accordance with at least one of a process that the instruction is issued by generating an interrupt to the virtual machine to be moved by a controller, and another process that a handler indicating the instruction registered by the virtual machine to be moved is executed by the controller, the controller controlling the virtual machine that is to operate in the first computer.

19. The virtual machine management program according to any one of claims 14 to 18,
wherein the program causes the first computer to execute:
performing, when an instruction included in the second instruction set but not included in the first instruction set is executed in the first computer by the moved virtual machine, emulation of the executed instruction; and
issuing a notification of the information relating to the first instruction set again to the moved virtual machine.

20. The virtual machine management program according to claim 19,
wherein the program causes the first computer to execute
converting, in a case where emulation has been performed before relating to the executed instruction, the executed instruction into an instruction capable of being executed by the first computer by a controller that controls a virtual machine that operates in the first computer.
